# EUROPEAN PATENT APPLICATION

(11) **EP 4 436 110 A1**
(43) Date of publication of application: **25.09.2024**
(21) Application number: 24164776.7
(22) Date of filing: 20.03.2024
(51) Int. Cl.: H04L 9/40, H04L 9/32, G06F 21/64

(54) **ANONYMOUSLY ISSUING A VERIFIABLE CREDENTIAL**

(30) Priority: 21.03.2023 EP 23163314
(71) Applicant: Koninklijke KPN N.V., 3072 AP Rotterdam (NL); Nederlandse Organisatie voor toegepast-natuurwetenschappelijk Onderzoek TNO, 2595 DA 's-Gravenhage (NL)
(72) Inventor: De Kok, Willem Adriaan, 9743 LH Groningen (NL); Van Deventer, Mattijs Oskar, 2264 DL Leidschendam (NL)
(74) Representative: Wuyts, Koenraad Maria

(57) **Abstract**

A system (33) of a credential issuer is configured to obtain claim information associated with a credential holder, obtain signing information for an anonymity group (31), create proof for the claim information by signing the claim information with the signing information, create the verifiable credential for the credential holder, and provide the verifiable credential to a system (11) of the credential holder. The credential issuer is a member of the anonymity group, the signing information is unique for the credential issuer, the verifiable credential comprises the claim information and the proof, and the verifiable credential comprises or is associated with verification information which is common to all members of the anonymity group.

## Description

### FIELD OF THE INVENTION

The invention relates to a method of issuing a verifiable credential.

The invention further relates to a system of a credential issuer, a system of a credential holder, and a system of a credential verifier for use in such a method.

The invention also relates to computer program products enabling a system of a credential issuer, a system of a credential holder, and a system of a credential verifier to perform steps of such a method.

### BACKGROUND OF THE INVENTION

Self-sovereign identity (SSI) is a technology which has as one of its main goals to electronically support parties as they negotiate and execute (business) transactions. Within the world of SSI, many different models exist. An often-used model is the perspective where there are a holder, an issuer, and a verifier. A holder manages verifiable credentials, which can be seen as a partial identity of the subject of those credentials, which shall be presumed to be the holder itself. The verifiable credentials are issued to the holder by an issuer. If a verifier wants to know something about the holder, the verifier can send a specified proof request upon which the holder can answer with a presentation of proof to the verifier. Identifiers and schemas are registered in a verifiable data registry.

The value of a verifiable credential depends for a great part on the party who has issued the verifiable credential. A verifier, who gets a verifiable credential presented from a holder will want to check the credibility of the issuer of that verifiable credential. A common solution is the registration of issuers in a public trust registry, which links the public key of the issuer to the identity of the issuer. This enables the verifier to verify that the diploma was indeed signed by a specific university, for example.

Most advanced verifiable-credential-based solutions focus on the privacy of the holder. The use of zero-knowledge proofs assures that a verifier is unable to link the presentation of a verifiable credential to a specific holder, even if the verifier colludes with the issuer of that verifiable credential. Still, the verifier learns the public key of the issuer of the verifiable credential. This leads to a trade-off between scalability and holder privacy. For example, if an older-than-18 zero-knowledge proof is based on a verifiable credential that is signed by the city of Groningen, then the verifier additionally learns that the holder is registered in Groningen.

There are however schemas that give an improvement over privacy with respect to the issuer public key. In the paper "Issuer-hiding Attribute-Based Credentials" by Bobolz et al., published on pages 158-178 of the proceeding of the Cryptology and Network Security: 20th International Conference, held December 13-15, 2021, a protocol has been described which hides the issuer public key. In this protocol, the verifier ad hoc determines a set of appropriate issuer (public) keys that will be accepted as issuer of the verifiable credential. Then the holder gives a non-interactive zero-knowledge (NIZK) proof that the issuer key, which was used to sign the verifiable credential, is part of the set of appropriate verifiable credentials.

A drawback of this protocol is that the public key of the issuer remains known to the holder. This means that the holder can identify the issuer, e.g. by a look-up in a public registry, by colluding with other holders and perform deanonymizing correlations, and/or by publishing the issuer public key (doxing). Thus, this protocol does not provide sufficient anonymity of the issuer towards the holder.

This is not a significant drawback if the issuer is a company or public institution, e.g. a university issuing diploma or the city of Groningen issuing date-of-birth information. In such cases, the holder would already know at which university they graduated, or in which city they reside. It becomes a significant drawback however if the issuer is a private citizen, e.g. a citizen issuing revokable contact information, a consumer issuing a product review, or an individual employee issuing on behalf of a company. In all these cases, the counterparty of the individual citizen, consumer or employee could start bothering them in the future, e.g. through spamming, denying access to a product or service, or other.

### SUMMARY OF THE INVENTION

It is a first objective of the invention to provide a method, which can be used to issue a verifiable credential with sufficient anonymity for the credential issuer.

It is a second objective of the invention to provide a system, which can be used to issue a verifiable credential with sufficient anonymity for the credential issuer.

In a first aspect of the invention, a method of issuing a verifiable credential comprises obtaining, at a system of a credential issuer, claim information associated with a credential holder, the credential holder being a different person or organization than the credential issuer, obtaining, at the system of the credential issuer, signing information for an anonymity group, the credential issuer being a member of the anonymity group, the signing information being unique for the credential issuer, and creating, at the system of the credential issuer, proof for the claim information by signing the claim information with the signing information.

The method further comprises creating, at the system of the credential issuer, the verifiable credential for the credential holder, the verifiable credential comprising the claim information and the proof, the verifiable credential comprising or being associated with verification information, the verification information being common to all members of the anonymity group, and providing the verifiable credential from the system of the credential issuer to a system of the credential holder.

With this method, neither the credential holder nor the credential verifier is able to determine that the verifiable credential has been issued by the credential issuer. They can only determine that the verifiable credential has been issued by a member of the anonymity group. This makes it possible for the credential issuer to issue a verifiable credential with sufficient anonymity. The above-described method is superior to a naive solution in which the issuer would create a new private-public key pair for each and every newly issued verifiable credential. The sheer quantity of keys would make such an approach unmanageable.

Advantageously, techniques known from ring signature schemes and group signature schemes may be used. In these schemes, only the roles of message signer and message verifier are required (compared to the roles of issuer, holder, and verifier in verifiable credential schemes). These schemes have as advantage that the message verifier is not able to determine the identity of the message signer from whom they received the message. Similar techniques may be used in certain steps of the above-described method, not to protect the identity of the credential holder with respect to the credential verifier, but to protect the identity of the credential issuer with respect to the credential holder.

The credential issuer issues the verifiable credential to the credential holder by creating the verifiable credential for the credential holder and providing the verifiable credential to the system of the credential holder. The other members of the anonymity group do not need to be aware that they are members of the anonymity group, e.g. if ring signatures are used. The method may be performed by software running on a programmable device. This software may be provided as a computer program product.

The method may further comprise providing, by the system of the credential holder, a presentation of the verifiable credential to a system of a credential verifier, and verifying, at the system of the credential verifier, based on the verification information, that the verifiable credential has been issued by a member of the anonymity group. The presentation of the verifiable credential may comprise one or more verifiable credentials from one or more credential issuers.

The verifiable credential may be provided from the system of the credential issuer to the system of the credential holder via an anonymous channel. This allows the system of the credential holder and the system of the credential issuer to have direct contact without compromising the identity of the credential issuer.

In a second aspect of the invention, a system of a credential issuer for use in the above-described method comprises at least one processor configured to obtain claim information associated with a credential holder, the credential holder being a different person or organization than the credential issuer, obtain signing information for an anonymity group, the credential issuer being a member of the anonymity group, the signing information being unique for the credential issuer, create proof for the claim information by signing the claim information with the signing information, create the verifiable credential for the credential holder, the verifiable credential comprising the claim information and the proof, the verifiable credential comprising or being associated with verification information, the verification information being common to all members of the anonymity group, and provide the verifiable credential to a system of the credential holder.

The at least one processor may be configured to obtain group information and public cryptographic information associated with the anonymity group from a group management system, obtain private cryptographic information for the credential issuer in relation to the anonymity group, determine the signing information based on the group information and the private cryptographic information, create the proof for the claim information by creating a signature with the signing information, and determine the verification information based on the group information and the public cryptographic information. This signature may be a group signature, for example. In group signature schemes, an opening authority may be able to reveal the identity of the credential issuer.

The at least one processor may be configured to obtain private cryptographic information and corresponding public cryptographic information for the credential issuer, obtain further public cryptographic information for each further credential issuer of the anonymity group, determine the signing information based on the private cryptographic information, the public cryptographic information, and the further public cryptographic information, and create the proof for the claim information by creating a signature with the signing information, the signature comprising the verification information, the verification information comprising the public cryptographic information and the further public cryptographic information.

This signature may be a ring signature, for example. The other members of the anonymity group do not need to be aware that they are members of the anonymity group. If they are, they may intentionally share their public keys with each other. If they are not, the credential issuer may create an anonymity group of its choosing by obtaining publicly available public keys of its choosing. In ring signature schemes, there is no opening authority who is able to reveal the identity of the credential issuer.

The at least one processor may be configured to perform polymorphic re-rerandomization and/or polymorphic pseudonymization on the signing information and create the proof for the claim information by creating the signature with the re-randomized and/or pseudonymized signing information. This may be used to help improve the privacy of the credential issuer, as third parties cannot correlate verifiable credentials from the same credential issuer.

In a third aspect of the invention, a system of a credential holder for use in the above-described method comprises at least one processor configured to receive a verifiable credential from a system of a credential issuer, the credential holder being a different person or organization than the credential issuer, the verifiable credential comprising claim information and proof for the claim information, the credential issuer being a member of an anonymity group, the verifiable credential comprising or being associated with verification information, the verification information being common to all members of the anonymity group. The at least one processor may further be configured to provide a presentation of the verifiable credential to a system of a credential verifier.

The at least one processor may be configured to verify, based on the verification information, that the verifiable credential has been issued by a member of the anonymity group, and provide the presentation of the verifiable credential to the system of the credential verifier only if the verifiable credential is verified to have been issued by a member of the anonymity group. This allows the credential holder to avoid that they provide a verifiable credential to a credential verifier that is not going to accept the verifiable credential. The verifier does not accept the verifiable credential when the verify operation that it performs has a negative outcome.

In a fourth aspect of the invention, a system of a credential verifier for use in the above-described method comprises at least one processor configured to receive a presentation of a verifiable credential from a system of a credential holder, the verifiable credential comprising claim information and proof for the claim information, the verifiable credential having been issued by a credential issuer, the credential issuer being a member of an anonymity group, the credential holder being a different person or organization than the credential issuer, the verifiable credential comprising or being associated with verification information, the verification information being common to all members of the anonymity group, and verify, based on the verification information, that the verifiable credential has been issued by a member of the anonymity group.

The at least one processor may be configured to obtain the verification information from the system of the credential holder and/or the system of the credential issuer and/or a group management system, the verification information comprising group information and public cryptographic information associated with the anonymity group. Such verification information may be used, for example, if the proof comprised in the verifiable credential comprises a group signature. In that case, the verification information is normally not comprised in the verifiable credential.

The at least one processor may be configured to transmit a request to reveal the identity of the credential issuer to the system of the credential holder or directly to a system of an opening authority, and receive information specifying the identity of the credential issuer from the system of the opening authority if the request was accepted by the system of the opening authority. The system of the opening authority may be a group management system, e.g. if the same person has the role of opening authority and group manager. If the request is transmitted to the system of the credential holder, it will forward the request to the system of the opening authority.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

In a fifth aspect of the invention, a computer program product comprises instructions which, when the program is executed by a system of a credential issuer, cause the system to perform the steps of obtaining claim information associated with a credential holder, the credential holder being a different person or organization than the credential issuer, obtaining signing information for an anonymity group, the credential issuer being a member of the anonymity group, the signing information being unique for the credential issuer, creating proof for the claim information by signing the claim information with the signing information, creating the verifiable credential for the credential holder, the verifiable credential comprising the claim information and the proof, the verifiable credential comprising or being associated with verification information, the verification information being common to all members of the anonymity group, and providing the verifiable credential to a system of the credential holder. The computer program product may be stored on a non-transitory computer-readable storage medium.

In a sixth aspect of the invention, a computer program product comprises instructions which, when the program is executed by a system of a credential holder, cause the system to perform the step of receiving a verifiable credential from a system of a credential issuer, the credential holder being a different person or organization than the credential issuer, the verifiable credential comprising claim information and proof for the claim information, the credential issuer being a member of an anonymity group, the verifiable credential comprising or being associated with verification information, the verification information being common to all members of the anonymity group. The computer program product may be stored on a non-transitory computer-readable storage medium.

In a seventh aspect of the invention, a computer program product comprises instructions which, when the program is executed by a system of a credential verifier, cause the system to perform the steps of receiving a presentation of a verifiable credential from a system of a credential holder, the verifiable credential comprising claim information and proof for the claim information, the verifiable credential having been issued by a credential issuer, the credential issuer being a member of an anonymity group, the credential holder being a different person or organization than the credential issuer, the verifiable credential comprising or being associated with verification information, the verification information being common to all members of the anonymity group, and verifying, based on the verification information, that the verifiable credential has been issued by a member of the anonymity group. The computer program product may be stored on a non-transitory computer-readable storage medium.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s).

It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a flow diagram of a first embodiment of the method;
Fig. 2 is a flow diagram of a second embodiment of the method;
Fig. 3 is a block diagram of first embodiments of the systems of the credential issuer, credential holder, and credential verifier;
Fig. 4 is a block diagram of second embodiments of the systems of the credential issuer, credential holder, and credential verifier;
Fig. 5 is a flow diagram of a third embodiment of the method;
Fig. 6 is a flow diagram of a fourth embodiment of the method;
Fig. 7 is a flow diagram of a fifth embodiment of the method;
Fig. 8 is a first example of possible steps performed by the systems of Fig. 3;
Fig. 9 is a second example of possible steps performed by the systems of Fig. 3;
Fig. 10 is a third example of possible steps performed by the systems of Fig. 3;
Fig. 11 is a fourth example of possible steps performed by the systems of Fig. 3; and
Fig. 12 is a block diagram of an exemplary data processing system for performing the steps of the method of the invention.

Corresponding elements in the drawings are denoted by the same reference numeral.

### DETAILED DESCRIPTION OF THE DRAWINGS

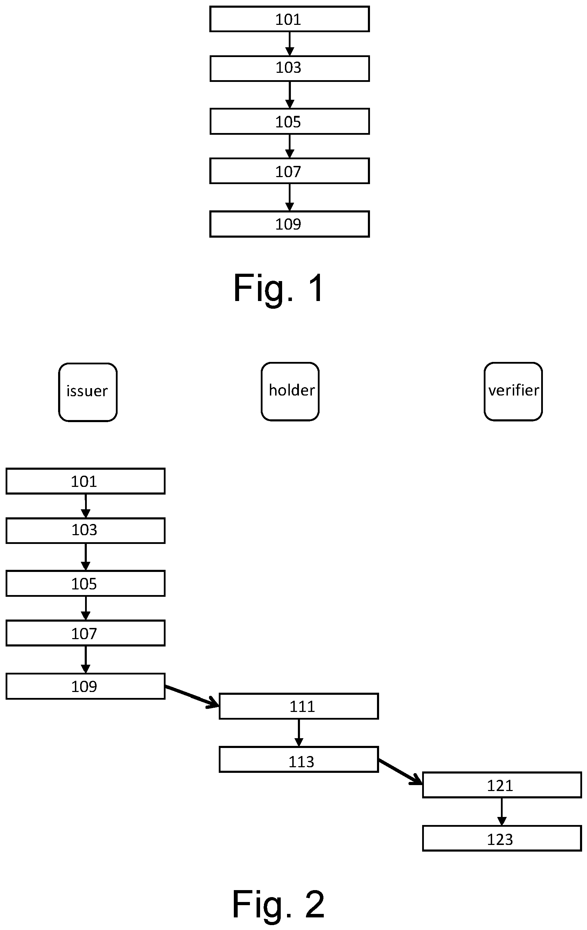

A first embodiment of the method of issuing a verifiable credential is shown in Fig. 1. A step 101 comprises obtaining, at a system of a credential issuer, claim information associated with a credential holder. The credential holder is a different person or organization than the credential issuer. The claim information may relate to a license (e.g. a driver's license), a ticket, a vaccination, an employment, a product review, an access authorization, or a privileged contact information, for example.

A step 103 comprises obtaining, at the system of the credential issuer, signing information for an anonymity group, e.g. a private key. The credential issuer is a member of the anonymity group. The signing information is unique for the credential issuer. A step 105 comprises creating, at the system of the credential issuer, proof for the claim information obtained in step 101 by signing the claim information with the signing information obtained in step 103. The same signing information is normally used to sign multiple pieces of claim information for multiple credential holders. However, the resulting proofs/signatures are all different. Unlike in data encryption, the signing of information normally does not alter the information.

A step 107 comprises creating, at the system of the credential issuer, the verifiable credential for the credential holder. The verifiable credential comprises the claim information obtained in step 101 and the proof created in step 105. In this specification, the term verifiable credential refers to the combination of the claim information and the proof. In other documents, the term verifiable credential may refer to only the claim information. In a simple implementation, creating the verifiable credential may merely comprise linking the proof to the claim information.

The verifiable credential comprises or is associated with verification information. The verification information is common to all members of the anonymity group. A step 109 comprises providing the verifiable credential created in step 107 from the system of the credential issuer to a system of the credential holder, e.g. via an anonymous channel. The proof and the claim information are linked but may be provided separately to the system of the credential holder.

Advantageously, techniques known from ring signature schemes and group signature schemes may be used. In these schemes, only the roles of message signer and message verifier are required (compared to the roles of issuer, holder, and verifier in verifiable credential schemes). These schemes have as advantage that the message verifier is not able to determine the identity of the message signer from whom they received the message.

These techniques may be used in certain steps of the above-described method, not to protect the identity of the credential holder with respect to the credential verifier, but to protect the identity of the credential issuer with respect to the credential holder. The claim information may in this case be treated as the message, the role of the message signer may be assigned to the credential issuer, and the role of the message verifier may be assigned to the credential verifier. The verifiable credential is managed by the credential holder even though the message/claim information is not signed by the credential holder.

A second embodiment of the method of issuing a verifiable credential is shown in Fig. 2. The second embodiment of Fig. 2 is an extension of the first embodiment of Fig. 1. Steps 111, 113, 121, and 123 are performed after steps 101-109 of Fig. 1.

Step 111 comprises receiving the verifiable credential at the system of the credential holder. Step 113 comprises providing, by the system of the credential holder, a presentation of the verifiable credential received in step 111 to a system of a credential verifier. The presentation of the verifiable credential may comprise one or more verifiable credentials from one or more credential issuers.

The presentation may be a presentation as defined by the W3C standard on verifiable credentials, for example. The W3C has defined a presentation of a verifiable credential as data derived from one or more verifiable credentials, issued by one or more issuers, that is shared with a specific verifier. In this definition, a verifiable presentation is a tamper-evident presentation encoded in such a way that authorship of the data can be trusted after a process of cryptographic verification. Certain types of verifiable presentations might contain data that is synthesized from, but do not contain, the original verifiable credentials (for example, zero-knowledge proofs).

Step 121 comprises receiving the presentation of the verifiable credential at the system of the credential verifier. Step 123 comprises verifying, at the system of the credential verifier, based on the verification information, that the verifiable credential has been issued by a member of the anonymity group. The verification information may be comprised in the verifiable credential or may be obtained separately.

In an implementation, the credential issuer is able to revoke the verifiable credential that the credential issuer has issued to the credential holder, making use of a public revocation list, a cryptographic accumulator, or blockchain-based revocation, for example. Anonymous and private communication channels may be used between the credential holder and the credential issuer, between the credential issuer and the credential verifier, and/or between the credential holder and the credential verifier. Examples of such channels are:
- Anonymous emailers, anonymous chat, WhatsApp, Signal, Telegram, forum chat
- Onion routing networks, like TOR and NYM
- In-person Bluetooth, Wi-Fi direct, QR-code, dead drop
- DIDcomm protocol

Different implementations may encapsulate the exchanged information in different ways, e.g. JSON, JSON-LD and XML. Different implementations may use different types of verifiable credentials, e.g. W3C Verifiable Credentials and Hyperledger Indy Anonymous Credentials (anoncreds). Different implementations may use different presentation exchange protocols for the verification of verifiable credentials, e.g. OIDC Presentation Exchange and DIDcomm Presentation Exchange.

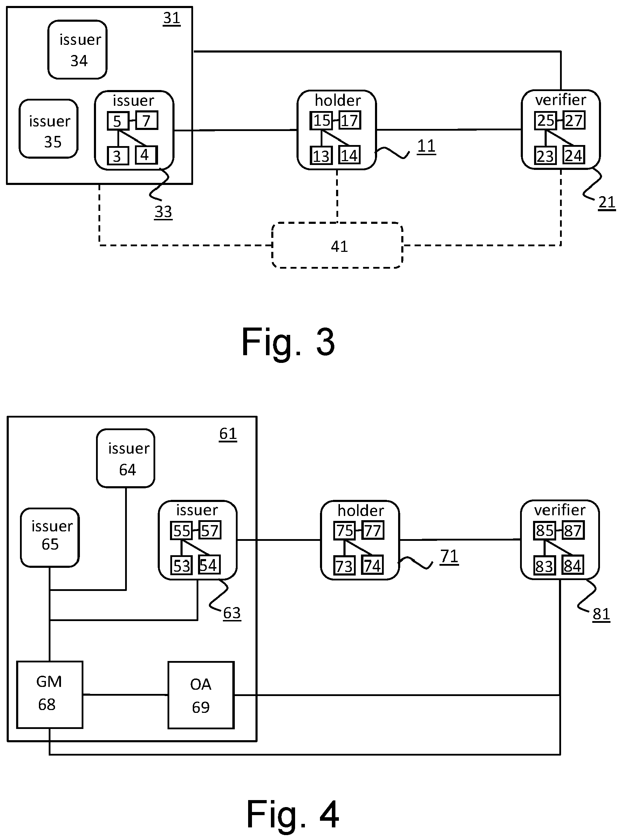

First embodiments of the systems of the credential issuer, credential holder, and credential verifier are shown in Fig. 3. The system 33 of the credential issuer comprises a receiver 3, a transmitter 4, a processor 5, and a memory 7. The processor 5 is configured to obtain claim information associated with a credential holder and obtain signing information for an anonymity group 31. The credential holder is a different person or organization than the credential issuer. The credential issuer is a member of the anonymity group 31. The signing information is unique for the credential issuer. In the example of Fig. 3, the anonymity group 31 further comprises an issuer who uses system 34 and an issuer who uses system 35.

The processor 5 is further configured to create proof for the claim information by signing the claim information with the signing information, create the verifiable credential for the credential holder, and provide the verifiable credential to a system 11 of the credential holder, e.g. via an anonymous channel. The verifiable credential comprises the claim information and the proof. The verifiable credential comprises or is associated with verification information. The verification information is common to all members of the anonymity group.

The system 11 of the credential holder comprises a receiver 13, a transmitter 14, a processor 15, and a memory 17. The processor 15 is configured to receive the verifiable credential from the system 33 of the credential issuer and provide a presentation of the verifiable credential to the system 21 of the credential verifier.

The system 21 of the credential verifier comprises a receiver 23, a transmitter 24, a processor 25, and a memory 27. The processor 25 is configured to receive the presentation of the verifiable credential from the system 11 of the credential holder and verify, based on the verification information, that the verifiable credential has been issued by a member of the anonymity group 31.

The systems 11, 21, and 33-35 may communicate with a verifiable data registry 41. The verifiable data registry 41 mediates the creation and verification of identifiers, keys, and other relevant data, such as verifiable credential schemas, revocation registries, issuer public keys, and so on, which might be required to use verifiable credentials. For example, the systems 33-35 may register identifiers and schemas to be stored on the verifiable data registry 41, the system 11 may register additional identifiers on the verifiable data registry 41 and use schemas stored on the verifiable data registry 41, and the system 21 may verify identifiers and schemas stored on the verifiable data registry 41.

In the embodiments shown in Fig. 3, the systems 11, 21, and 33 comprise one processor 15, one processor 25, and one processor 5, respectively. In an alternative embodiment, one or more of the systems 11, 21, and 33 comprise multiple processors. The processors 5, 15, and 25 may be general-purpose processors, e.g., ARM, Qualcomm, AMD, or Intel processors, or application-specific processors. The processors 5, 15, and 25 may run Google Android, Apple iOS, a Unix-based operating system or Windows as operating system, for example.

The receivers 3, 13, and 23 and the transmitters 4, 14, and 24 of the systems 33, 11, and 21, respectively, may use one or more wired or wireless communication technologies such as Ethernet, Wi-Fi, LTE, and/or 5G New Radio to communicate with other devices on the Internet via an access point/base station, or they may use in-person communication like Bluetooth, Wi-Fi direct, QR-code, or a dead drop solution to communicate with other devices. The receiver and the transmitter of a system may be combined in a transceiver. The systems 11, 21, and 33 may comprise other components typical for a digital device.

Second embodiments of the systems of the credential issuer, credential holder, and credential verifier are shown in Fig. 4. The system 63 of the credential issuer comprises a receiver 53, a transmitter 54, a processor 55, and a memory 57. The processor 55 is configured to obtain claim information associated with a credential holder, obtain group information and public cryptographic information associated with an anonymity group 61 from a group management system 68, and obtain private cryptographic information for the credential issuer in relation to the anonymity group 61. The credential holder is a different person or organization than the credential issuer. The credential issuer is a member of the anonymity group 61.

The processor 55 is further configured to obtain signing information for the anonymity group 61. The processor 55 is configured to determine this signing information based on the obtained group information and the obtained private cryptographic information. The signing information is unique for the credential issuer. In the example of Fig. 4, the anonymity group 61 further comprises an issuer who uses system 64 and an issuer who uses system 65. The processor 55 is further configured to create proof for the claim information by signing the claim information with the signing information. In the embodiment of Fig. 4, the processor 55 is configured to create this proof by creating a group signature with the signing information.

The processor 55 is further configured to determine the verification information based on the group information and the public cryptographic information, create the verifiable credential for the credential holder, and provide the verifiable credential to a system 71 of the credential holder, e.g. via an anonymous channel. The verification information comprises the group information and the public cryptographic information associated with the anonymity group and is therefore common to all members of the anonymity group. The verifiable credential comprises the claim information and the proof. The verifiable credential is associated with verification information.

The system 71 of the credential holder comprises a receiver 73, a transmitter 74, a processor 75, and a memory 77. The processor 75 is configured to receive the verifiable credential, which comprises the group signature, from the system 63 of the credential issuer and provide a presentation of the verifiable credential to the system 81 of the credential verifier.

The system 81 of the credential verifier comprises a receiver 83, a transmitter 84, a processor 85, and a memory 87. The processor 85 is configured to receive the presentation of the verifiable credential from the system 71 of the credential holder and verify, based on the verification information, that the verifiable credential, which comprises the group signature, has been issued by a member of the anonymity group 61.

The processor 85 is further configured to transmit a request to reveal the identity of the credential issuer to the system 71 of the credential holder or directly to the system 69 of the opening authority and receive information specifying the identity of the credential issuer from the system 69 if the request was accepted by the system 69.

In the embodiments shown in Fig. 4, the systems 71, 81, and 63 comprise one processor 75, one processor 85, and one processor 55, respectively. In an alternative embodiment, one or more of the systems 71, 81, and 63 comprise multiple processors. The processors 55, 75, and 85 may be general-purpose processors, e.g., ARM, Qualcomm, AMD, or Intel processors, or application-specific processors. The processors 55, 75, and 85 may run Google Android, Apple iOS, a Unix-based operating system or Windows as operating system, for example.

The receivers 53, 73, and 83 and the transmitters 54, 74, and 84 of the systems 63, 71, and 81, respectively, may use one or more wired or wireless communication technologies such as Ethernet, Wi-Fi, LTE, and/or 5G New Radio to communicate with other devices on the Internet via an access point/base station, or they may use in-person communication like Bluetooth, Wi-Fi direct, QR-code, or a dead drop solution to communicate with other devices. The receiver and the transmitter of a system may be combined in a transceiver. The systems 71, 81, and 63 may comprise other components typical for a digital device.

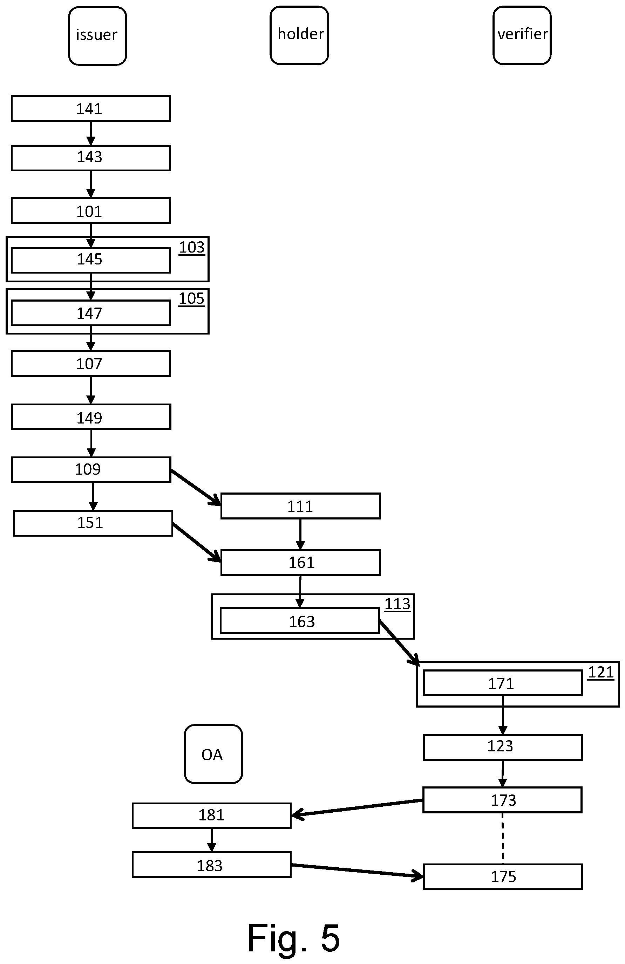

A third embodiment of the method of issuing a verifiable credential is shown in Fig. 5. The third embodiment of Fig. 5 is an extension of the second embodiment of Fig. 2. A step 141 comprises obtaining, at the system of the credential issuer, group information and public cryptographic information associated with the anonymity group from a group management system, e.g. group management system 68 of Fig. 4. A step 143 comprises obtaining, at the system of the credential issuer, private cryptographic information for the credential issuer in relation to the anonymity group. Step 101 comprises obtaining, at the system of the credential issuer, claim information associated with the credential holder.

In the embodiment of Fig. 5, step 103 of Fig. 2 has been implemented by a step 145. Step 145 comprises determining, at the system of the credential issuer, the signing information for the anonymity group based on the group information obtained in step 141 and the private cryptographic information obtained in step 143. The credential issuer is a member of the anonymity group. The signing information is unique for the credential issuer.

In the embodiment of Fig. 5, step 105 of Fig. 2 has been implemented by a step 147. Step 147 comprises creating, at the system of the credential issuer, the proof for the claim information obtained in step 101 by creating a signature for the claim information with the signing information determined in step 145. In this patent specification, the terms "creating a signature" and "signing" are used synonymously. The signing of claim information (with the help of signing information) results in the creation of a signature. When the term "signed claim information" is used, this refers to the combination of the claim information and the signature.

This signature may be a group signature, for example. Group signatures offer the following functionalities
❖ Soundness and completeness
   ➢ Valid signatures by group members always verify correctly, and invalid signatures always fail verification.
❖ Unforgeable
   ➢ Only members of the group can create valid group signatures.
❖ Anonymity
   ➢ Given a message and its signature, the identity of the individual signer cannot be determined without the group manager's secret key.
❖ Traceability
   ➢ Given any valid signature, the group manager should be able to trace which user issued the signature. (This and the previous requirement imply that only the group manager can break users' anonymity.)
❖ Unlinkability
   ➢ Given two messages and their signatures, we cannot tell if the signatures were from the same signer or not.
❖ No framing
   ➢ Even if all other group members (and the managers) collude, they cannot forge a signature for a non-participating group member.
❖ Unforgeable tracing verification
   ➢ The group manager cannot falsely accuse a signer of creating a signature he did not create.
❖ Collusion resistance
   ➢ A colluding subset of group members cannot generate a valid signature that the group manager cannot link to one of the colluding group members.

If a group signature is used, in addition to the roles of issuer, holder, and verifier, the role of group manager is normally included. The group manager ensures that only valid members are part of the anonymity group. The group manager manages the processes for bootstrapping the anonymity group, members joining the anonymity group, members leaving the anonymity group, and terminating the anonymity group. Examples of group signatures are ACJT 2000, BBS04, and BS04.

The group signature may be created, for example, by using the "Sign" algorithm described in the article "Foundations of Fully Dynamic Group Signatures" by Bootle, J., Cerulli, A., Chaidos, P., Ghadafi, E., Groth, J., published in proceedings of Applied Cryptography and Network Security 2016.

Given a user's group signing key *gsk,* group information *info,* and a message *m,* the Sign algorithm outputs a group signature ∑. The message *m* is the claim information obtained in step 101, the group information *info* is the group information obtained in step 141, and the user's group signing key *gsk* is the private cryptographic information obtained in step 143. Step 107 comprises creating, at the system of the credential issuer, the verifiable credential for the credential holder. The verifiable credential comprises the claim information obtained in step 101 and the proof created in step 147.

Step 149 comprises determining, at the system of the credential issuer, the verification information based on the group information obtained in step 141 and the public cryptographic information obtained in step 141. The resulting verification information comprises the group information and the public cryptographic information associated with the anonymity group and is therefore common to all members of the anonymity group. The verifiable credential comprises or is associated with this verification information.

Step 109 comprises providing the verifiable credential created in step 107 from the system of the credential issuer to the system of the credential holder, e.g. via an anonymous channel. Step 151 comprises providing the verification information determined in step 149 from the system of the credential issuer to the system of the credential holder, e.g. via the anonymous channel.

Step 111 comprises receiving the verifiable credential at the system of the credential holder. Step 161 comprises receiving the verification information at the system of the credential holder. In the embodiment of Fig. 5, step 113 of Fig. 2 has been implemented by a step 163. Step 163 comprises providing, by the system of the credential holder, a presentation of the verifiable credential which comprises the verifiable credential received in step 111 and providing the verification information received in step 161 to the system of the credential verifier. The verifiable presentation may comprise one or more verifiable credentials from one or more credential issuers.

In the embodiment of Fig. 5, step 121 of Fig. 2 has been implemented by a step 171. Step 171 comprises receiving the presentation of the verifiable credential and the verification information at the system of the credential verifier. In an alternative embodiment, (updated) verification information may alternatively or additionally be received from the system of the credential issuer and/or a group management system. Step 123 comprises verifying, at the system of the credential verifier, based on the verification information received in step 171, that the verifiable credential in the verifiable presentation received in step 171 has been issued by a member of the anonymity group.

The signature may be verified, for example, by using the "Verify" algorithm described in the above-mentioned article "Foundations of Fully Dynamic Group Signatures". The Verify algorithm checks whether a group signature ∑ is a valid group signature on message *m* with respect to group public key *gpk* and group information *info* and outputs a bit: 1 for accept and 0 for reject. The message *m* is the claim information included in the verifiable credential. The group public key *gpk* and the group information *info* are the group information and the public cryptographic included in the verification information received in step 171 in this example.

If the credential verifier suspects abusive use of signing, steps 173 and 175 are performed at the system of the credential verifier. Step 173 comprises transmitting, at the system of the credential verifier, a request to reveal the identity of the credential issuer directly to a system of an opening authority, e.g. system 69 of Fig. 4. Step 181 comprises receiving the request at the system of the opening authority. In an alternative embodiment, the request is transmitted by the system of the credential verifier to the system of the credential holder and the system of the credential holder then forwards this request to the system of the opening authority.

Verification information and at least the signature of the verifiable credential (and optionally the entire verifiable credential) are normally also sent to the system of the opening authority, e.g. in step 173 at the system of the credential verifier, and received at the system of the opening authority, e.g. in step 181.

Step 183 comprises transmitting, at the system of the opening authority, information specifying the identity of the credential issuer to the system of the credential verifier if the request received in step 181 is accepted. Step 175 comprises receiving the information specifying the identity of the credential issuer at the system of the credential verifier.

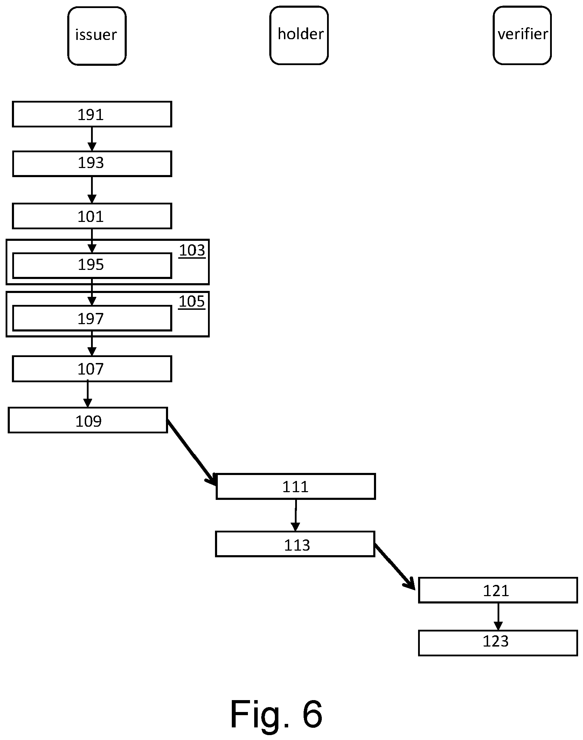

A fourth embodiment of the method of issuing a verifiable credential is shown in Fig. 6. The fourth embodiment of Fig. 6 is an extension of the second embodiment of Fig. 2. A step 191 comprises obtaining, at the system of the credential issuer, private cryptographic information and corresponding public cryptographic information for the credential issuer. A step 193 comprises obtaining, at the system of the credential issuer, further public cryptographic information for each further credential issuer of the anonymity group. Step 101 comprises obtaining, at a system of a credential issuer, claim information associated with the credential holder.

In the embodiment of Fig. 6, step 103 of Fig. 2 has been implemented by a step 195. Step 195 comprises determining, at the system of the credential issuer, the signing information for the anonymity group based on the private cryptographic information obtained in step 191, the public cryptographic information obtained in step 191, and the further public cryptographic information obtained in step 193. The credential issuer is a member of the anonymity group. The signing information is unique for the credential issuer.

In the embodiment of Fig. 6, step 105 of Fig. 2 has been implemented by a step 197. Step 197 comprises creating, at the system of the credential issuer, the proof for the claim information obtained in step 101 by creating a signature with the signing information obtained in step 195. The signature comprises the verification information. The verification information comprises the public cryptographic information and the further public cryptographic information and is therefore common to all members of the anonymity group.

The other members of the anonymity group do not need to be aware that they are members of the anonymity group. If they are, they may intentionally share their public keys with each other. If they are not, the credential issuer may create an anonymity group of its choosing by obtaining publicly available public keys of its choosing.

This signature may be a ring signature, for example. The ring signature is a type of digital signature that can be created by any member of a set of users that each have keys. Therefore, a message signed with a ring signature is endorsed by someone in a particular set of people. Different ring signature schemes allow for different security properties. One ring signature scheme could make it computationally infeasible to determine which of the set's members' keys was used to produce the signature. Another ring signature scheme could make it possible for the signer to revoke his anonymity when he signed it. Ring signatures may be based, for example, on RSA, Rabin signatures, elliptic curve, Pallier, El Gamal, or other cryptographic primitives.

The ring signature may be created, for example, by using the "ring-sign" procedure described in the article "How to Leak a Secret" by Rivest, Shamir, and Tauman, published in Proceedings of Asiacrypt 2001, volume 2248 of LNCS, Springer-Verlag, Berlin: (2001), pp. 552-565. The ring-sign procedure produces a ring signature σ for a message m, given the public keys Pi, P₂, ... , Pᵣ of the r ring members, together with the secret key Sₛ of the s-th member (who is the actual signer).

The message m is the claim information obtained in step 101, the s-th member is the credential issuer who issues the verifiable credential, the secret key Sₛ and the public key Pₛ are obtained in step 191 and the other public keys Pᵢ are obtained in step 193. The signature σ includes the public keys of all the possible signers. These public keys, i.e. the public cryptographic information and the further public cryptographic information, are used as verification information in step 123.

Step 107 comprises creating, at the system of the credential issuer, the verifiable credential for the credential holder. The verifiable credential comprises the claim information obtained in step 101 and the proof created in step 197. Since the signature comprises the verification information, the verifiable credential comprises the verification information. Step 109 comprises providing the verifiable credential created in step 107 from the system of the credential issuer to a system of the credential holder, e.g. via an anonymous channel.

Step 111 comprises receiving the verifiable credential at the system of the credential holder. Step 113 comprises providing, by the system of the credential holder, a presentation of the verifiable credential received in step 111 to a system of a credential verifier. The presentation of the verifiable credential may comprise one or more verifiable credentials from one or more credential issuers.

Step 121 comprises receiving the presentation of the verifiable credential at the system of the credential verifier. Step 123 comprises verifying, at the system of the credential verifier, based on the verification information, that the verifiable credential received in step 121 has been issued by a member of the anonymity group.

The signature may be verified by using the "ring-verify" procedure described in the above-mentioned article "How to Leak a Secret". The ring-verify procedure accepts a message m and a signature σ (which includes the public keys of all the possible signers), and outputs either true or false. The message *m* is the claim information. Both the claim information and the signature σ, i.e. the proof, are included in the verifiable credential in this example.

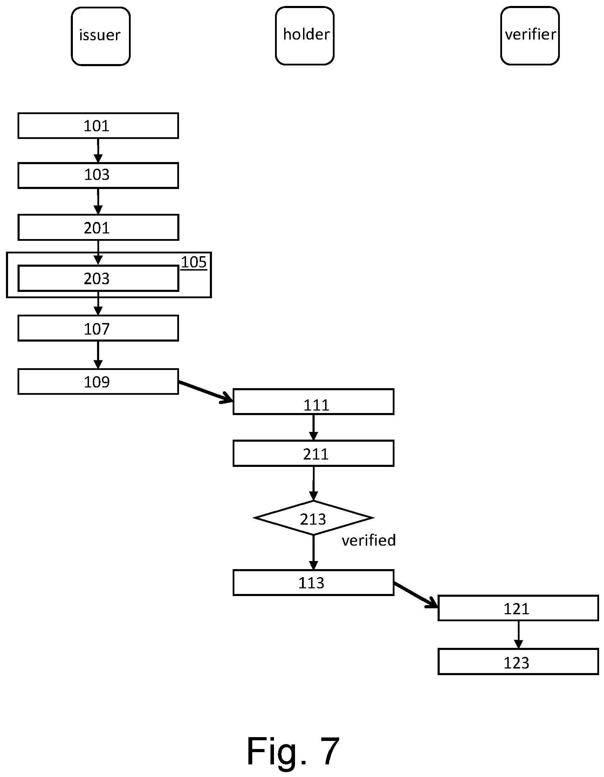

A fifth embodiment of the method of issuing a verifiable credential is shown in Fig. 7. The fifth embodiment of Fig. 7 is an extension of the second embodiment of Fig. 2. In the embodiment of Fig. 7, a step 201 is performed between steps 103 and 105, step 105 has been implemented by a step 203, and steps 211 and 213 are performed between steps 111 and 113.

Step 201 comprises performing, at the system of the credential issuer, polymorphic re-randomization and/or polymorphic pseudonymization on the signing information obtained in step 103. Step 203 comprises creating, at the system of the credential issuer, the proof for the claim information by creating the signature with the re-randomized and/or pseudonymized signing information obtained in step 201.

Step 211 comprises verifying, at the system of the credential holder, based on the verification information, that the verifiable credential has been issued by a member of the anonymity group. The verification information may be comprised in the verifiable credential or may be obtained separately. Step 213 comprises checking, at the system of the credential holder, whether the result of step 211 is positive. If it is determined in step 213 that the verifiable credential was verified in step 211 to have been issued by a member of the anonymity group, then step 113 is performed. If not, then no presentation of the verifiable credential is provided to the system of the credential verifier.

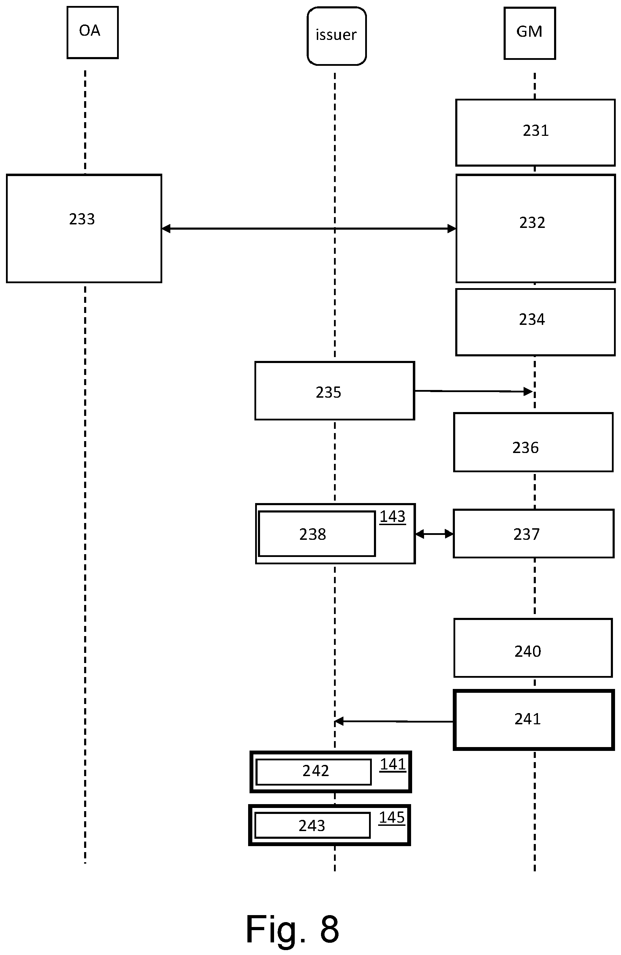

Figs. 8-11 are examples of possible steps performed by the systems of Fig. 3 when the algorithms described in the above-mentioned article "Foundations of Fully Dynamic Group Signatures" are used. In the examples of Figs. 8-11, the roles of the group manager and the opening authority are split up over two different entities. In the example of Fig. 8, the credential issuer joins the anonymity group. A step 231 comprises the group manager running the algorithm "GSetup" described in the above-mentioned article "Foundations of Fully Dynamic Group Signatures" to generate public parameters *param.*

Steps 232 and 233 form an interactive protocol. Step 232 comprises the group manager running the algorithm "GKGen_{GM}" described in "Foundations of Fully Dynamic Group Signatures". GKGen_{GM} takes an input message M_{GM} received from the opening authority and the state *st_{GM}* of the group manager as input and outputs the output value *out_{GM}*, the state *st_{GM}*, and a message *M_{OA}* for the opening authority. The state *st_{GM}* has *param* (generated in step 231) as initial value. If the group manager initiates the protocol, the message *M_{GM}* has "init" as initial value. In a successful execution of the protocol, the last call of this algorithm returns the group manager's public key *mpk* and the initial group information *info₀ in out_{GM}.* Step 232 further comprises the group manager transmitting the parameter *param* and the message *M_{OA}* to the opening authority.

Step 233 comprises the opening authority running the algorithm "GKGen_{OA}" described in "Foundations of Fully Dynamic Group Signatures". GKGen_{OA} takes an input message *M_{OA}* received from the group manager and the state *st_{OA}* of the opening authority as input and outputs the output value *out_{OA},* the state *st_{OA},* and a message *M_{GM}* for the group manager. The state of *st_{OA}* has *param* (generated in step 231) as initial value. If the opening authority initiates the protocol, the message *M_{OA}* has "init" as initial value. In a successful execution of the protocol, the last call of this algorithm returns the opening authority's public key *opk* and the opening authority's private key *osk* in *out_{OA}.* Step 233 further comprises the opening authority transmitting the message *M_{GM}* and the opening authority's private key *osk* to the group manager.

A step 234 comprises the group manager generating a group public key *gpk* which comprises the *param* parameters, the group manager's public key *mpk,* and the opening authority's public key *opk,* which were obtained in steps 232 and 233. A step 235 comprises the credential issuer sending a request to join the anonymity group to the group manager. A step 236 comprises the group manager receiving this request.

Steps 237 and 238 comprise the credential issuer and the group manager jointly running the interactive "Join" protocol described in "Foundations of Fully Dynamic Group Signatures". After the protocol has ended, the credential issuer will have obtained an updated state *st* in step 238 and the group manager will have obtained an updated state *st_{GM}* in step 237. In a successful execution of the protocol, the credential issuer will further have obtained an own group secret key *gsk* in step 238. Step 238 is an implementation of step 143 of Fig. 5.

A step 240 comprises the group manager running the "UpdateGroup" algorithm. Based on input comprising a state *st_{GM}* and a set consisting of session identifiers associated with users to be revoked, this algorithm returns new public group information *info* and an updated state *st_{GM}*. A step 241 comprises the group manager transmitting the group public key *gpk* generated in step 234 and the new public group information *info* obtained in step 240 to the credential issuer.

A step 242 comprises the credential issuer receiving the group public key *gpk* and the new public group information *info.* Step 242 is an implementation of step 141 of Fig. 5. A step 243 comprises determining signing information which consists of the credential issuer's group secret key *gsk* obtained in step 238 and the new public group information *info* received in step 242. Step 243 is an implementation of step 145 of Fig. 5.

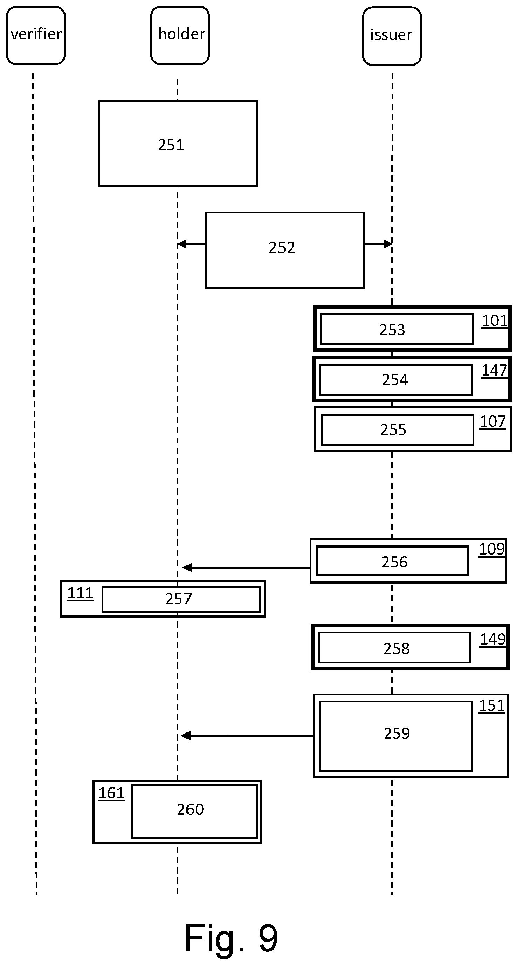

In the example of Fig. 9, the credential holder and the credential issuer establish an anonymous communication channel between them and the credential issuer issues a verifiable credential to the credential holder. A step 251 comprises the credential holder determining that a need exists for a credential issued by someone from the anonymity group. Alternatively, an issuer determines that a need exists for a credential to be issued to a particular holder. A step 252 comprises the credential holder and the credential issuer setting up an anonymous communication channel and the credential holder requesting the credential from the credential issuer.

A step 253 comprises the credential issuer obtaining claim information associated with the credential holder. The claim information might relate specifically to the credential holder, e.g. whether the credential holder is employed by a certain company, whether the credential holder has been vaccinated (the issuer being health-care staff), an access authorization, or privileged contact information, or it might not relate specifically to the credential holder, e.g. an anonymous concert ticket or a concert ticket in the name of a different credential holder. Step 253 is an implementation of step 101 of Fig. 5.

A step 254 comprises the credential issuer running the "Sign" algorithm described in "Foundations of Fully Dynamic Group Signatures". Given the credential issuer's group secret key *gsk* obtained in step 238 of Fig. 8, the claim information obtained in step 253, which is input as message *m* in the Sign algorithm, and the group information *info* obtained in step 242 of Fig. 8, the Sign algorithm outputs a group signature ∑. Step 254 is an implementation of step 147 of Fig. 5. The group information *info* and the credential issuer's group secret key *gsk* together form the signing information, which is used together with the claim information to create the signature.

A step 255 comprises the credential issuer creating the verifiable credential for the credential holder. The verifiable credential comprises the claim information obtained in step 253 and the proof/group signature ∑ created in step 254. Step 255 is an implementation of step 107 of Fig. 5. A step 256 comprises the credential issuer sending the verifiable credential created in step 255 to the credential holder. Step 256 is an implementation of step 109 of Fig. 5. A step 257 comprises the credential holder receiving the credential. Step 257 is an implementation of step 111 of Fig. 5.

A step 258 comprises the credential issuer determining verification information. The verification information comprises the group public key *gpk* and the public group information *info* obtained in step 242 of Fig. 8. Step 258 is an implementation of step 149 of Fig. 5. A step 259 comprises the credential issuer sending the verification information determined in step 258 and contact information for contacting the group manager to the credential holder. Step 259 is an implementation of step 151 of Fig. 5. A step 260 comprises the credential holder receiving the verification information and the contact information for contacting the group manager.

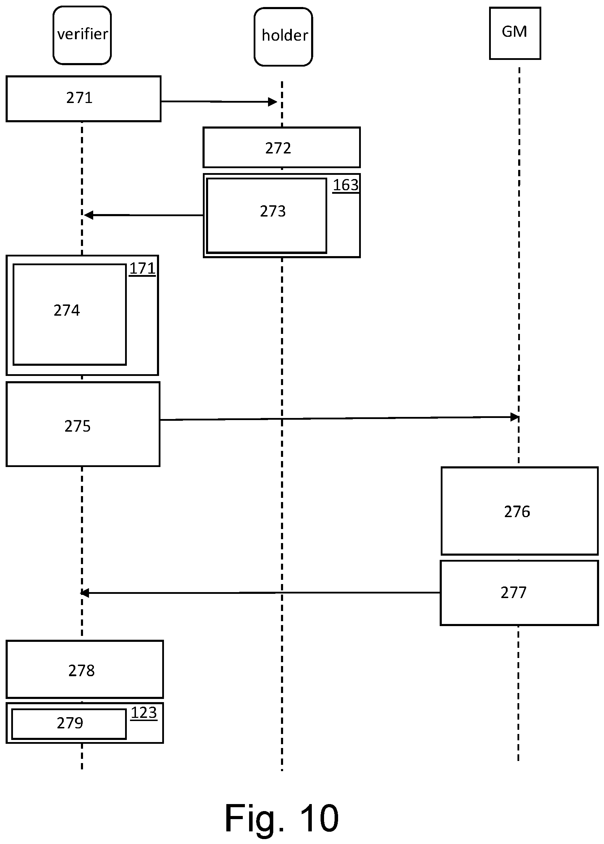

In the example of Fig. 10, the credential holder shares verification information with the credential verifier so that the credential verifier can verify the credential presented by the credential holder (issued by the credential issuer). A step 271 comprises the credential verifier sending a request to verify the claim to the credential holder, i.e. the credential verifier wants to verify the claim and wants to receive information to be able to do this. A step 272 comprises the credential holder receiving this request. Steps 271 and 272 are optional. In a variation on the example of Fig. 10, steps 271 and 272 are omitted.

A step 273 comprises the credential holder creating a presentation of the verifiable credential received in step 257 of Fig. 9, e.g. compliant to the W3C standard on verifiable credentials. Such a presentation may comprise one or more verifiable credentials from one or more credential issuers and presentation metadata. In version 1.1 of the W3C Verifiable Credentials Data Model, the claim information and the proof are encoded separately in the presentation and the claim information is referred to as the verifiable credential in the context of the presentation.

Step 273 further comprises the credential holder providing this presentation to the credential verifier and providing the verification information and the contact information for contacting the group manager received in step 260 of Fig. 9 to the credential verifier. Step 273 is an implementation of step 163 of Fig. 5. If steps 271 and 272 are omitted, the credential holder performs step 273 without first receiving a request. A step 274 comprises the credential verifier receiving the presentation and receiving the verification information and contact information. Step 274 is an implementation of step 171 of Fig. 5.

A step 275 comprises the credential verifier sending, with the help of the contact information received in step 274, the verification information received in step 274 and a request for up-to-date verification information to the group manager. A step 276 comprises the group manager receiving this verification information and this request. A step 277 comprises the group manager sending the requested up-to-date verification information to the credential verifier. A step 278 comprises the credential verifier receiving this up-to-date verification information. Steps 275-278 are optional. In a variation on the example of Fig. 10, steps 275-278 are omitted.

A step 279 comprises the credential verifier running the "Verify" algorithm described in "Foundations of Fully Dynamic Group Signatures". The Verify algorithm checks whether the group signature ∑ , which is included as proof in the verifiable credential received in step 274, is a valid group signature on message *m* , i.e. the claim information included in the verifiable credential, with respect to group public key *gpk* and group information *info,* which are included in the verification information received in step 274. The Verify algorithm outputs a bit: 1 for accept and 0 for reject. Step 279 is an implementation of step 123 of Fig. 5.

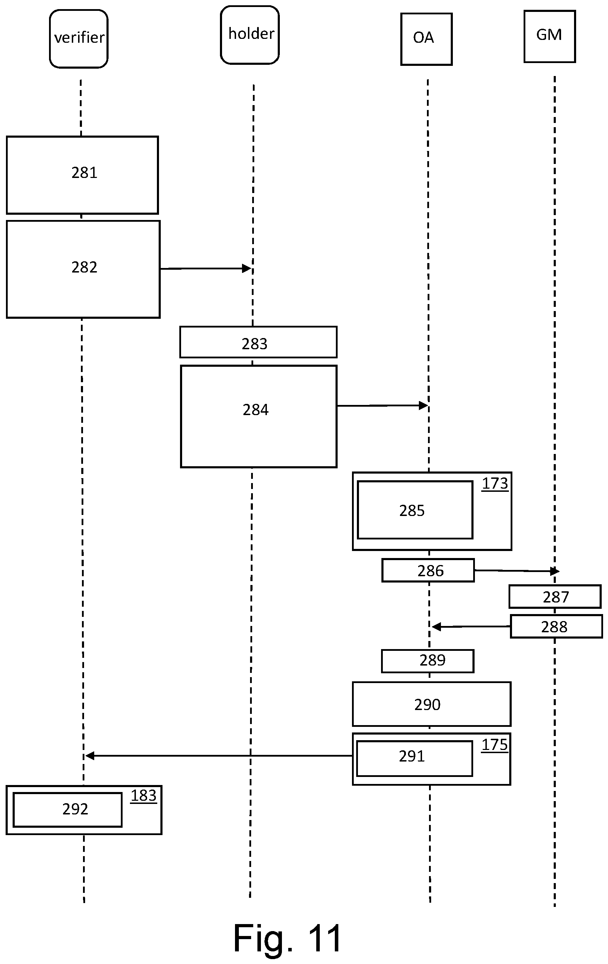

In the example of Fig. 11, the credential verifier has a reason to learn the identity of the issuer. For instance, in a case where the verifier is (part of) a privacy routing service provider (PRSP) and the claim information contains a permission for the credential holder to contact the issuer of the credential, the verifier may need to know to who the issuer is and how to contact the issuer. In this case, the identity of the credential issuer should stay hidden from the credential holder, but the credential verifier is allowed to know the identity of the credential issuer. In this case, unlike in normal applications of group signatures, transmission of the reveal request is not an exception but normal.

The opening authority may keep a list of trusted verifiers and only reveal the identity to a verifier on this list. The verifier/PRSP may already know how to contact the credential issuer and not need the opening authority to provide this information. If not, the identity of the credential issuer, as revealed by the opening authority, may comprise contact information of the credential issuer. After the verifier has verified the credential, it will forward one or more messages from the holder to the issuer. As an example of forwarding one message, any message that needs to be forwarded to the issuer by the verifier/PRSP may be accompanied by this credential.

There may also be a case where the verifier expects that the credential issuer makes abusive use of the group signature (e.g. falsified vaccination proofs). In such a case, the credential verifier asks the opening authority to reveal who the issuer of the credential is. Without this information, the credential verifier only knows that the verifiable credential was issued by someone from the group, but not who from the group issued the credential.

A step 281 comprises the credential verifier, after having verified that someone from the anonymity group signed the verifiable credential in step 279 of Fig. 10, determining that there may (likely) be abusive use of the group signature. A step 282 comprises the credential verifier sending a request to reveal the identity of the credential issuer to the credential holder. A step 283 comprises the credential holder receiving this request. A step 284 comprises the credential holder forwarding this request to the opening authority and sending a presentation of the credential to the opening authority.

In another embodiment, the presentation of the credential may already have been included in the request from the credential issuer. Alternatively, the credential verifier sends the request to reveal the identity of the credential issuer together with the presentation of the verifiable credential directly to the opening authority as shown in step 173 of Fig. 5. Step 284 further comprises the credential holder sending verification information to the opening authority.

A step 285 comprises the opening authority receiving the request, the verification information, and the presentation of the verifiable credential, including the claim information and the group signature ∑ created by the credential issuer. Step 285 is an implementation of step 181 of Fig. 5. A step 286 comprises the opening authority sending a request for up-to-date verification information to the group manager. A step 287 comprises the group manager receiving this request. A step 288 comprises the group manager sending the requested up-to-date verification information to the opening authority. The up-to-date verification information comprises up-to-date versions of the group public key *gpk* generated in step 234 and the public group information *info* obtained in step 240. A step 289 comprises the opening authority receiving this up-to-date verification information. Steps 286-289 are optional. In a variation on the example of Fig. 11, steps 286-289 are omitted.

A step 290 comprises the opening authority running the "Open" algorithm described in "Foundations of Fully Dynamic Group Signatures". The Open algorithm is given as input the group public key *gpk* received in step 289, the group information *info* received in step 289, the key *osk* created in step 233 of Fig. 8, the claim information received in step 285 (input to the Open algorithm as message *m*), and the group signature ∑ received in step 285. The Open algorithm returns a session/user identifier *i* together with a proof *π* attributing group signature ∑ to user *i*, i.e. the credential issuer of Figs. 8 and 9. Step 290 further comprises determining the name of the credential issuer based on the session/user identifier *i*.

A step 291 comprises the opening authority sending the name of the credential issuer, as determined in step 290, to the credential verifier. Step 291 is an implementation of step 175 of Fig. 5. Step 292 comprises the credential verifier receiving the name of the credential issuer. Step 292 is an implementation of step 183 of Fig. 5.

In an alternative embodiment, the verifier and the opening authority are one and the same person or organization, steps 283 and 284 would be skipped, and the reveal request would be an internal one.

In an alternative embodiment, some of the steps of Figs. 8 to 11 are performed in a different order. For example, the credential issuer may obtain the group public key *gpk* and the public group information *info* only immediately before the credential issuer needs this information.

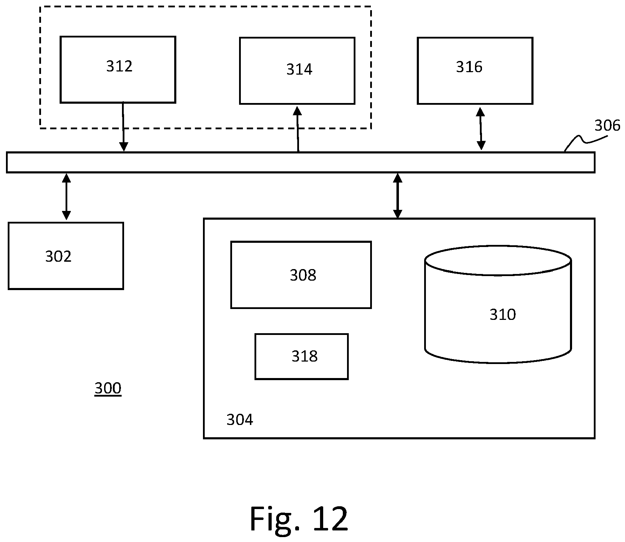

Fig. 12 depicts a block diagram illustrating an exemplary data processing system that may perform the method as described with reference to Figs. 1-2 and 5-11.

As shown in Fig. 12, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the number of times program code must be retrieved from the bulk storage device 310 during execution.

Input/output (I/O) devices depicted as an input device 312 and an output device 314 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 12 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

The network adapter 316 may allow the data processing system to connect to the Internet, e.g. via Wi-Fi or Ethernet, and/or directly to nearby devices, e.g. via Bluetooth, Wi-Fi-Direct or Ultrasound. Data may also be exchanged between other devices and the data processing system in another way, e.g. by enabling the data processing system to scan a QR code displayed on another device and/or by enabling the data processing system to display a QR code for scanning by another device.

As pictured in Fig. 12, the memory elements 304 may store an application 318. In various embodiments, the application 318 may be stored in the local memory 308, he one or more bulk storage devices 310, or separate from the local memory and the bulk storage devices. It should be appreciated that the data processing system 300 may further execute an operating system (not shown in Fig. 12) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of issuing a verifiable credential, the method comprising:
- obtaining (101), at a system of a credential issuer, claim information associated with a credential holder, the credential holder being a different person or organization than the credential issuer;
- obtaining (103), at the system of the credential issuer, signing information for an anonymity group, the credential issuer being a member of the anonymity group, the signing information being unique for the credential issuer;
- creating (105), at the system of the credential issuer, proof for the claim information by signing the claim information with the signing information;
- creating (107), at the system of the credential issuer, the verifiable credential for the credential holder, the verifiable credential comprising the claim information and the proof, the verifiable credential comprising or being associated with verification information, the verification information being common to all members of the anonymity group; and
- providing (109) the verifiable credential from the system of the credential issuer to a system of the credential holder.

2. A method as claimed in claim 1, wherein the method further comprises:
- providing (113), by the system of the credential holder, a presentation of the verifiable credential to a system of a credential verifier; and
- verifying (123), at the system of the credential verifier, based on the verification information, that the verifiable credential has been issued by a member of the anonymity group.

3. A method as claimed in claim 1 or 2, wherein the verifiable credential is provided from the system of the credential issuer to the system of the credential holder via an anonymous channel.

4. A system (33,63) of a credential issuer for use in a method according to claim 1, 2, or 3, the system (33,63) of the credential issuer comprising at least one processor (5,55) configured to:
- obtain claim information associated with a credential holder, the credential holder being a different person or organization than the credential issuer,
- obtain signing information for an anonymity group (31), the credential issuer being a member of the anonymity group (31), the signing information being unique for the credential issuer,
- create proof for the claim information by signing the claim information with the signing information,
- create the verifiable credential for the credential holder, the verifiable credential comprising the claim information and the proof, the verifiable credential comprising or being associated with verification information, the verification information being common to all members of the anonymity group, and
- provide the verifiable credential to a system (11) of the credential holder.

5. A system (33) as claimed in claim 4, wherein the at least one processor (5) is configured to:
- obtain private cryptographic information and corresponding public cryptographic information for the credential issuer,
- obtain further public cryptographic information for each further credential issuer of the anonymity group (33),
- determine the signing information based on the private cryptographic information, the public cryptographic information, and the further public cryptographic information, and
- create the proof for the claim information by creating a signature with the signing information, the signature comprising the verification information, the verification information comprising the public cryptographic information and the further public cryptographic information.

6. A system (33,63) as claimed in claim 4, wherein the at least one processor (5,55) is configured to:
- obtain group information and public cryptographic information associated with the anonymity group (31) from a group management system (68),
- obtain private cryptographic information for the credential issuer in relation to the anonymity group (31),
- determine the signing information based on the group information and the private cryptographic information,
- create the proof for the claim information by creating a signature with the signing information, and
- determine the verification information based on the group information and the public cryptographic information.

7. A system (33,63) as claimed in any one of claims 4 to 6, wherein the at least one processor (5,55) is configured to perform polymorphic re-rerandomization and/or polymorphic pseudonymization on the signing information and create the proof for the claim information by creating the signature with the re-randomized and/or pseudonymized signing information.

8. A system (11,71) of a credential holder for use in a method according to claim 1, 2, or 3, the system (11,71) of the credential holder comprising at least one processor (15,75) configured to:
- receive a verifiable credential from a system (33,63) of a credential issuer, the credential holder being a different person or organization than the credential issuer, the verifiable credential comprising claim information and proof for the claim information, the credential issuer being a member of an anonymity group (31), the verifiable credential comprising or being associated with verification information, the verification information being common to all members of the anonymity group (31).

9. A system (11,71) as claimed in claim 8, wherein the at least one processor (15,75) is configured to provide a presentation of the verifiable credential to a system (21,81) of a credential verifier.

10. A system (11,71) as claimed in claim 8 or 9, wherein the at least one processor (15,75) is configured to:
- verify, based on the verification information, that the verifiable credential has been issued by a member of the anonymity group (31), and
- provide the presentation of the verifiable credential to the system (21,81) of the credential verifier only if the verifiable credential is verified to have been issued by a member of the anonymity group (31).

11. A system (21,81) of a credential verifier for use in a method according to claim 2, the system (21,81) of the credential verifier comprising at least one processor (25,85) configured to:
- receive a presentation of a verifiable credential from a system (11,71) of a credential holder, the verifiable credential comprising claim information and proof for the claim information, the verifiable credential having been issued by a credential issuer, the credential issuer being a member of an anonymity group (31), the credential holder being a different person or organization than the credential issuer, the verifiable credential comprising or being associated with verification information, the verification information being common to all members of the anonymity group (31), and
- verify, based on the verification information, that the verifiable credential has been issued by a member of the anonymity group (31).

12. A system (21,81) as claimed in claim 11, wherein the at least one processor (25,85) is configured to obtain the verification information from the system (11,71) of the credential holder and/or the system of the credential issuer (33,63) and/or a group management system (68), the verification information comprising group information and public cryptographic information associated with the anonymity group (31).

13. A system (21,81) as claimed in claim 12, wherein the at least one processor (25,85) is configured to:
- transmit a request to reveal the identity of the credential issuer to the system (11,71) of the credential holder or directly to a system (69) of an opening authority, and
- receive information specifying the identity of the credential issuer from the system (69) of the opening authority if the request was accepted by the system (69) of the opening authority.

14. A computer program product comprising instructions which, when the program is executed by a system of a credential issuer, cause the system to perform the steps of:
- obtaining claim information associated with a credential holder, the credential holder being a different person or organization than the credential issuer;
- obtaining signing information for an anonymity group, the credential issuer being a member of the anonymity group, the signing information being unique for the credential issuer;
- creating proof for the claim information by signing the claim information with the signing information;
- creating the verifiable credential for the credential holder, the verifiable credential comprising the claim information and the proof, the verifiable credential comprising or being associated with verification information, the verification information being common to all members of the anonymity group; and
- providing the verifiable credential to a system of the credential holder.

15. A computer program product comprising instructions which, when the program is executed by a system of a credential holder, cause the system to perform the step of:
- receiving a verifiable credential from a system of a credential issuer, the credential holder being a different person or organization than the credential issuer, the verifiable credential comprising claim information and proof for the claim information, the credential issuer being a member of an anonymity group, the verifiable credential comprising or being associated with verification information, the verification information being common to all members of the anonymity group.

16. A computer program product comprising instructions which, when the program is executed by a system of a credential verifier, cause the system to perform the steps of:
- receiving a presentation of a verifiable credential from a system of a credential holder, the verifiable credential comprising claim information and proof for the claim information, the verifiable credential having been issued by a credential issuer, the credential issuer being a member of an anonymity group, the credential holder being a different person or organization than the credential issuer, the verifiable credential comprising or being associated with verification information, the verification information being common to all members of the anonymity group; and
- verifying, based on the verification information, that the verifiable credential has been issued by a member of the anonymity group.
